(19) Europäisches Patentamt
European Patent Office
Office européen des brevets

(11) **EP 0 527 611 B1**

(12) **EUROPEAN PATENT SPECIFICATION**

(45) Date of publication and mention
of the grant of the patent:
**05.03.1997 Bulletin 1997/10**

(51) Int Cl.6: **H04N 9/80**, H04N 5/92

(21) Application number: **92307244.1**

(22) Date of filing: **07.08.1992**

(54) **Digital video signal recording apparatus**

Vorrichtung zum Aufzeichnen eines digitalen Videosignals

Dispositif d'enregistrement de signal vidéo numérique

(84) Designated Contracting States:
**DE FR GB**

(30) Priority: **09.08.1991 JP 225014/91**

(43) Date of publication of application:
**17.02.1993 Bulletin 1993/07**

(73) Proprietor: **SONY CORPORATION**
**Tokyo (JP)**

(72) Inventor: **Murakami, Yoshihiro**
**Shinagawa-ku, Tokyo 141 (JP)**

(74) Representative:
**Robinson, Nigel Alexander Julian et al**
**D. Young & Co.,**
**21 New Fetter Lane**
**London EC4A 1DA (GB)**

(56) References cited:
**EP-A- 0 304 836**    **EP-A- 0 401 854**
**EP-A- 0 471 118**    **EP-A- 0 482 888**
**US-A- 4 984 076**

• **IEEE GLOBAL TELECOMMUNICATIONS CONFERENCE & EXHIBITION vol 2, December 1988, HOLLYWOOD, FLA.,US pages 1073-1079, XPOOOO79274 DOI ET AL "ADAPTIVE DCT CODING FOR HOME DIGITAL VTR"**
• **IEEE TRANSACTIONS ON CONSUMER ELECTRONICS vol. 35, no. 3, August 1989, NEW YORK US pages 450 - 457 , XP000065969 YAMAMITSU ET AL 'AN EXPERIMENTAL STUDY FOR A HOME-USE DIGITAL VTR'**
• **PATENT ABSTRACTS OF JAPAN vol. 014, no. 182 (E-916)12 April 1990 & JP-A-20 32 688 & JP-A-5 047 852**
• **IEEE TRANSACTIONS ON CONSUMER ELECTRONICS vol. CE-37, no. 3, August 1991, NEW YORK US pages 267 - 274 , XP000263195 KIM ET AL 'BIT RATE REDUCTION ALGORITHM FOR A DIGITAL VCR'**
• **PATENT ABSTRACTS OF JAPAN vol. 013, no. 195 (E-754)10 May 1989 & JP-A-10 16 193**
• **SIGNAL PROCESSING. IMAGE COMMUNICATION vol. 2, no. 2, August 1990, AMSTERDAM NL pages 187 - 199 , XP000243477 HAGHIRI ET AL 'A LOW BIT RATE CODING ALGORITHM FOR FULL MOTION VIDEO SIGNAL"**

## Description

The present invention relates to a recording apparatus for compressing a digital video signal by using transform encoding and for recording the compressed signal on a magnetic tape.

In recent years, as digital VTRs for digitizing a color video signal and for recording the digitized signal on a recording medium such as a magnetic tape, DI format component type digital VTRs for use in broadcasting stations and D2 format composite type digital VTRs have been practically used. In these digital VTRs, the component signal or the composite signal was recorded on the magnetic tape without compression thereof.

A technique for compressing an amount of information of a digital video signal by using a highly efficient coding has been proposed so as to decrease the length of the magnetic tape and to facilitate the use of a tape cassette which is small in size. As one of the highly efficient coding, transform encoding has been known. Particularly, in two-dimensional transform encoding of transform encoding, image data is segmented into blocks each of which consists of, for instance, (8 x 8) picture elements. Thereafter, the image data is orthogonally transformed block by block. The transformed components (referred to as coefficients) are classified into a DC component to high frequency components. Generally, the data amount of the DC component is large, while that of the high frequency components is small. Thus, by properly allocating a number of bits to each coefficient, the total number of bits can be decreased. Recently, in particular, DCT (Discrete Cosine Transform) has gained popularity.

In the digital VTR using the transform encoding, for example, the two-dimensional DCT technique, since coefficient data is encoded into variable length code, the amount of data per block varies depending on the amount of the high frequency component in the image. In the record mode, a sync block with a fixed length is normally formed. However, the encoded output per block cannot be always divided into one sync block or an integer number of sync blocks. To solve this problem, an encoded output is successively inserted into each sync block, and an ID code is added so as to identify the end of each block. However, in this technique, since such additional information is required, the degree of redundancy becomes large. In addition, a circuit for detecting the end is required for the reproduce system. As another technique, when the largest data per block is a reference data, dummy data (zero data) is added in the case where the length of coefficient data is smaller than the reference data. It can be kept the data amount per block constant. However, in this technique, the degree of redundancy is still large.

In addition, when the transform encoding is used, there is another problem that all information of the block is lost since data of each block is successively recorded on a magnetic tape in the case where if a continuous error such as a burst error which cannot be corrected by an error correction encoding technique takes place. In this case, in the reproduce system, it is difficult to compensate erroneous coefficient data with non-erroneous coefficient data in the adjacent normal blocks.

IEEE Global Telecommunications Conference and Exhibition, vol 2, December 1988, Hollywood, Florida, US, pages 1073-1079, Doi et al.: "Adaptive DCT Coding for Home Digital VTR" discloses a system in which picture element blocks are DCT transformed and then classified into three classes according to their AC content. Bit space within a block of low AC content is allocated to bits of a block of high AC content and the data so rearranged before being recorded on tape with block sizes less than the total number of DCT coefficients for a whole picture element block.

European Patent Application EP-A-0 401 854 discloses a system in which blocks of pixels are DCT transformed and then the DCT coefficients zig-zag scanned roughly in order of increasing spatial frequency before the data stream is processed further.

According to an aspect of the invention, there is provided a digital video signal recording apparatus for dividing an input digital video signal into a plurality of picture element blocks each containing a plurality of picture elements, for picture element block by picture element block transform encoding said digital video signal into coefficient data, and for recording said coefficient data on a magnetic tape using a plurality of magnetic heads disposed on a rotating drum, said apparatus being characterised by:

means for arranging said coefficient data from a group of picture element blocks in a sequence from a low order to a high order and for outputting arranged coefficient data for said group;
variable length encoding means for receiving said arranged coefficient data and for encoding said arranged coefficient data into variable length codes for forming a sync block of a fixed length; and
sync block length controlling means coupled to said variable length encoding means, for moving an overflow portion of said variable length codes of a group that exceeds said fixed length to a sync block of a group for which said variable length codes do not fill said fixed length so as to keep the length of each sync block constant.

Other aspects of this invention and its preferred features are described in the accompanying claims.

The above, and other, objects, features and advantages of the present invention will become readily apparent from the following detailed description thereof which is to be read in connection with the accompanying drawings.

Figure 1 is a block diagram showing a record system and a reproduce system in accordance with one embodiment of the present invention;

Figure 2A, 2B and 2C are schematic diagrams describing a process for a luminance signal;

Figs. 3A, 3B, and 3C are schematic diagrams describing a process for color difference signals;

Fig. 4 is a schematic diagram describing a signal process;

Fig. 5 is a schematic diagram describing a formation of sync blocks;

Fig. 6 is a schematic diagram describing an obtained record signal; and

Figs. 7A, 7B, 7C and 7D are schematic diagrams describing a shuffling process.

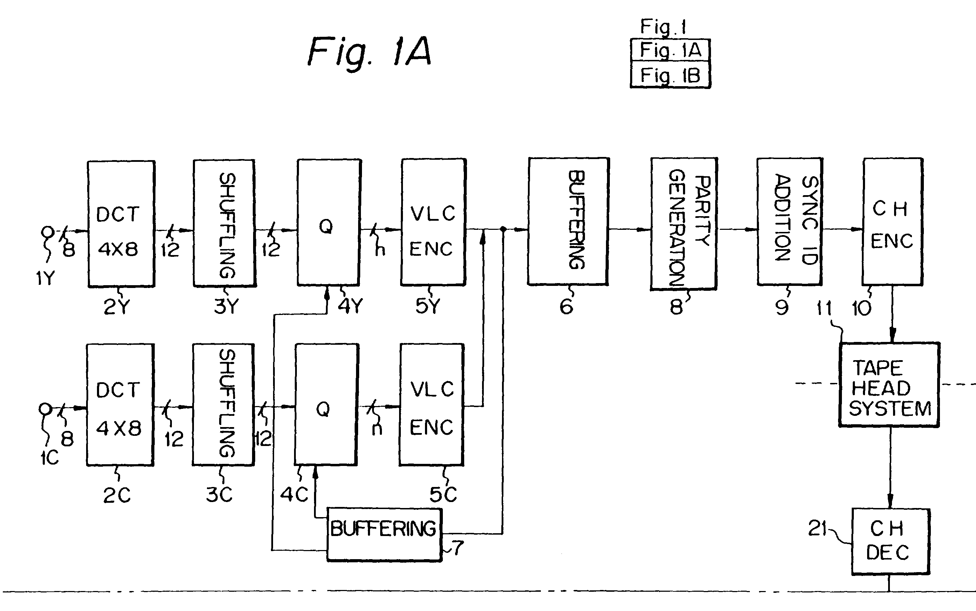

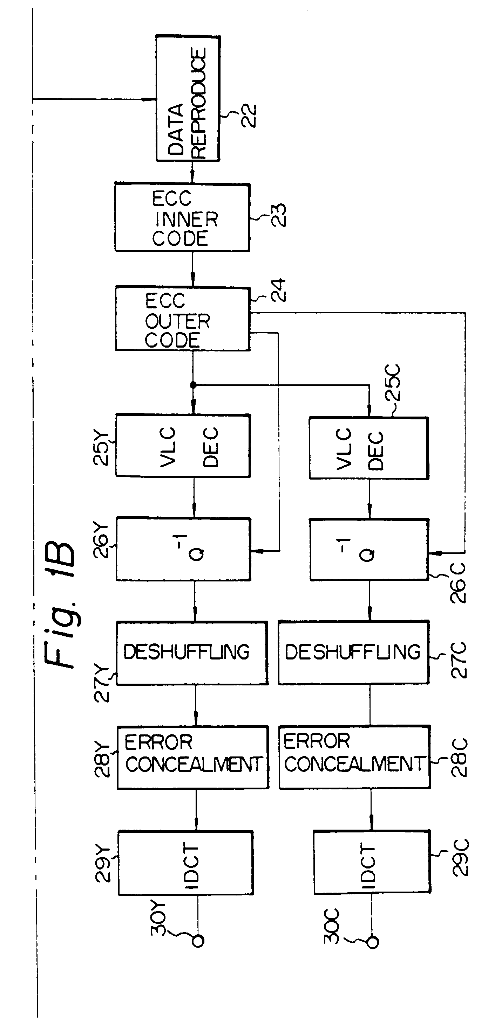

Then, with reference to the accompanying drawings, an embodiment of the present invention will be described in detail. Fig. 1 shows a signal process unit for use in a record system and a reproduce system. A digital luminance signal is sent to an input terminal represented with 1Y. Digital color difference signals CR and CB are supplied to an input terminal denoted as IC. In this case, the sampling frequencies each signal are at 13.5 MHz and 6.75 MHz, respectively, and the number of bits per sample is 8 bits. Form this (4 : 2 : 2) input video signals, data in the blanking interval is removed. Thus, only information in the valid region is recorded and reproduced. Although not shown, these input signals are converted from raster scanning sequence into block sequence by a block forming circuit.

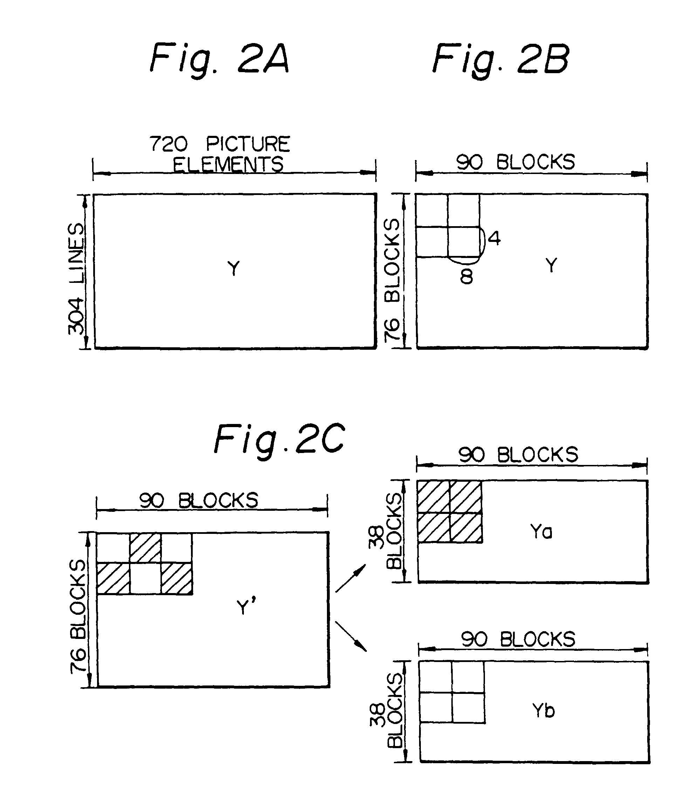

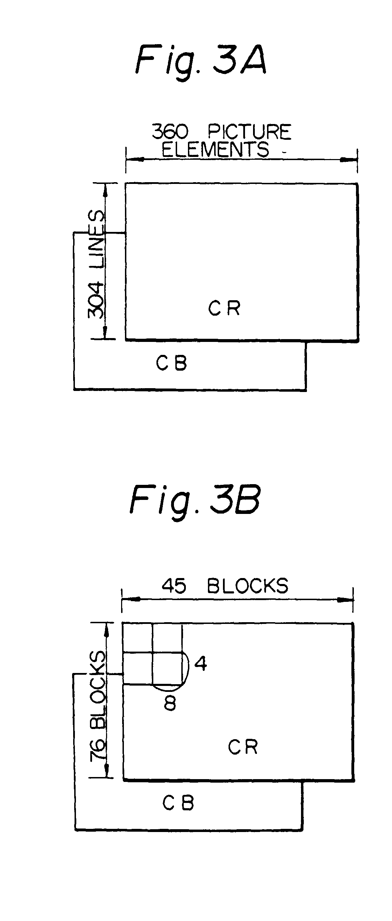

in this example, one field is divided into a large number of blocks, each of which consists of (8 x 4) picture elements. Fig. 2 shows the valid region and the block formation of the luminance signal. For the luminance signal Y, the valid information of (720 picture elements x 304 lines) shown in Fig. 2A is divided into (90 x 76) blocks as shown in Fig. 2B. For the color difference signals CR and C3, (45 x 76) blocks shown in Fig. 3B is formed of one field of valid information composed of (360 picture elements x 304 lines) shown in Fig. 3A.

The luminance signal and the color difference signals which have been block formed are DCT transformed by DCT transform circuits 2Y and 2C, respectively. Coefficient data (for example, 12 bits per sample) received from the DCT transform circuits 2Y and 2C is supplied to shuffling circuits 3Y and 3C, respectively. The shuffling circuits 3Y and 3C are composed of, for example, field memory and change the arrangement of coefficient data. In addition, the shuffling circuits 3Y and 3C perform shuffling and divide coefficient data of each field into two portions.

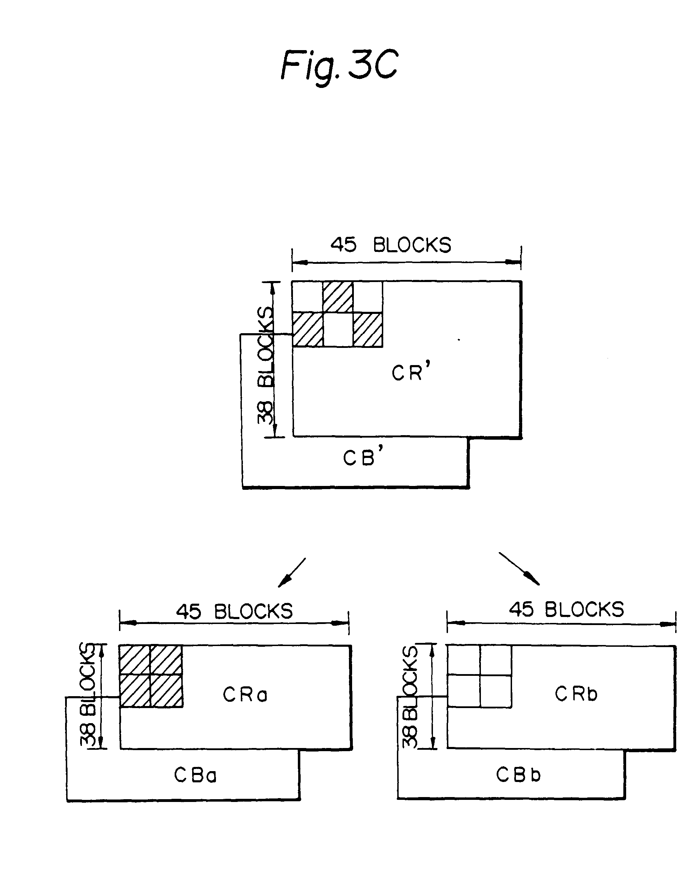

In other words, as shown in Fig. 2C, in the shuffling circuits 3Y and 3C, coefficient data Y' of luminance data Y in one field is divided into a hatched portion Ya and a non-hatched portion Yb, each of which consists of (90 x 38) blocks. Likewise, as shown in Fig. 3C, coefficient data CR' and CB' of one field of color difference data CR and CB are divided into four coefficient data, respectively. CRa, CRb, CBa, and CBb which consist of (45 x 38) blocks, respectively are formed.

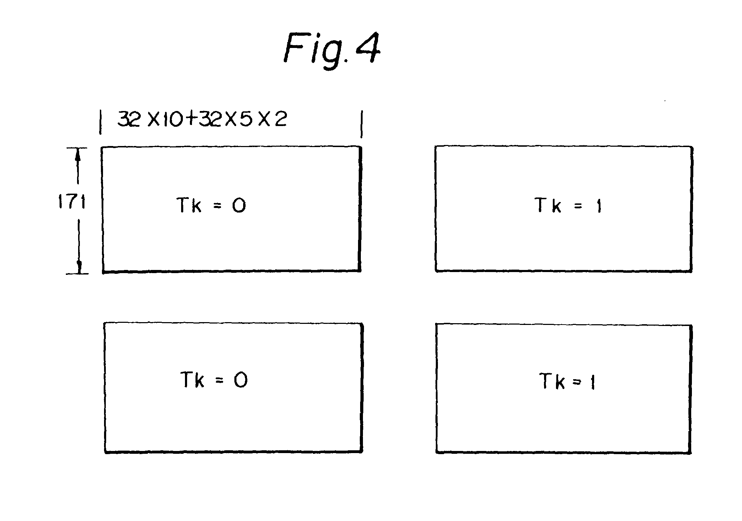

As shown in Fig. 4, record data for 1/4 fields represented by Tk = 0 and Tk = 1 is formed with the coefficient data Ya, CRa, and CBa. Likewise, with the coefficient data Yb, CRb, and CBb, record data for 1/4 fields represented by Tk = 0 and Tk = 1 is formed. The record data for 1/4 fields is recorded as four tracks, respectively. In this embodiment, double azimuth heads composed of two magnetic heads adjacently disposed are opposed at intervals of 180'. Two tracks are magnetically formed at the same time. Coefficient data of the luminance signal and the color difference signals for one field is recorded with four tracks.

In this case, since the hatched blocks and the non-hatched blocks of the coefficient data are alternately designated to a plurality of channels, even if one magnetic head gets clogged, the coefficient blocks surrounding the coefficient block on the magnetic head are reproduced by the other magnetic head. Thus, the coefficient data can be easily compensated. The coefficient data being shuffled is output in the sequence of a DC component followed by low order components, followed by high order components. As an example, the coefficient data being shuffled is sync blocks (each of which for example consists of 32 x 10 x 2 = 640 pieces of coefficient data) from the shuffling circuits 3Y and 3C. The resultant coefficient data is fed to quantizing circuits 4Y and 4C. The quantizing circuits 4Y and 4C quantize the data length of coefficient data from 12 bits into n bits which is smaller than 12.

The outputs of the quantizing circuits 4Y and 4C is supplied to variable length encoding circuits 5Y and 5C, respectively, and Huffman encoding is performed, for example. However, as described later, the important coefficients of the DC components among the coefficient data are not Huffman encoded. At the outputs of the variable length encoding circuits 5Y and 5C, the coefficient data of the luminance signal and that of the color difference signals are alternatively mixed. This output data is supplied to buffering circuits 6 and 7, respectively. The buffering circuit 6 keeps the length of each sync block constant. On the other hand, the buffering circuit 7 keeps the information amount of each track constant.

As described above, a predetermined amount of coefficient data (640 sync blocks) are obtained from the shuffling circuits 3Y and 3C. By the shuffling operation, the deviation of coefficient data amount of each block in one field is equalized. Although the deviation of the outputs from the variable length encoding circuits 5Y and 5C is small, there is still a deviation of length. The buffering circuit 6 keeps the length of each sync block constant.

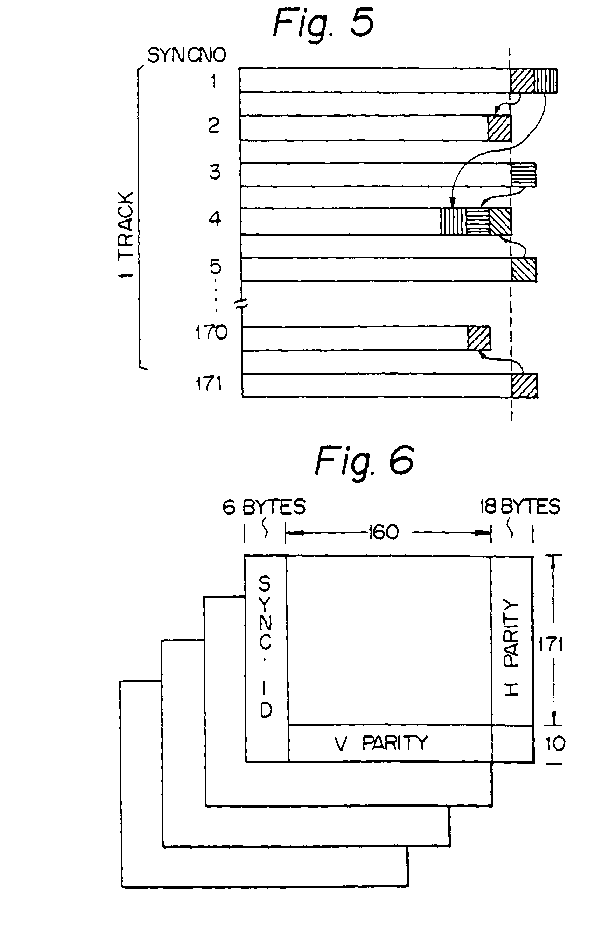

Fig. 5 shows the process of the buffering circuit 6, which keeps the length of each sync block which is recorded on one track constant. On one track, 171 sync blocks are recorded. In Fig. 5, L (= 640) represents the final length of each sync block. In Fig. 5, coefficient data of the DC component takes the first position. The lower order the coefficient data has, the later the data is disposed. In the example of Fig. 5, the data length of sync block NO. 1 is longer than L. The excessive portion is inserted into the sync block of sync block No. 2 and the sync block of sync block No. 4, the lengths of these sync blocks being smaller than L. The excessive portions of the sync block Nos. 3 and 5 are inserted into the sync block of sync block No. 4. The excessive portion of the sync block No. 171 is inserted into the sync block of sync block No. 170. Thus, there is a blank space in the sync block of the sync block No. 170.

When the process for keeping the length of each sync block constant is performed, an ID code which represents both the length of the variable length portion of one coefficient data block (that is, coefficient data of the AC component) and a sync block No. to which the excessive portion of the block is moved should be recorded so that the reproduce system can restore the former coefficient data. Thus, the buffering circuit 6 outputs sync blocks with a constant block length.

The buffering circuit 7 controls a quantizing step width for the quantizing circuits 4Y and 4C so as to keep an amount of information per track constant. In other words, the larger the quantizing step width, the smaller the number of bits n of coefficient data. In contrast, the smaller the quantizing step width, the larger the number of bits n of coefficient data. The buffering circuit 7 is provided with a circuit for estimating the data amount of the present field by using the data amount of the preceding field. The buffering circuit 7 controls the quantizing step width in accordance with the estimated data amount. In this example, the buffering circuit 7 controls the total of the data lengths of the variable length encoding circuits 5Y and 5C to (L x 171) or less.

The output data of the buffering circuit 6 is sent to a parity generation circuit 8, and an error correction encoding process is performed. As an example, as shown in Fig. 6, a product code in accordance with Reed Solomon code is used for record data of each track, which consists of (160 x 171). In other words, for coefficient data of each sync block in the horizontal direction, H parity of Reed Solomon code is formed. On the other hand, for coefficient data in the vertical direction and H parity, V parity of Reed Solomon code is formed. In addition, for coefficient data of other tracks, a similar error correction encoding process is performed.

The output of the parity generation circuit 8 is fed to a sync and ID addition circuit 9. This circuit 9 adds a synchronous signal and an ID code for each sync block. The output of the sync and ID additional circuit 9 is supplied to a channel encoder 10. The channel encoder 10 reduces the DC component of the record data. Although not shown, the output data of the channel encoder 10 is sent to four magnetic heads of a tape head system 11 through a record amplifier. Thus, the data is successively recorded on the magnetic tape for two tracks at a time.

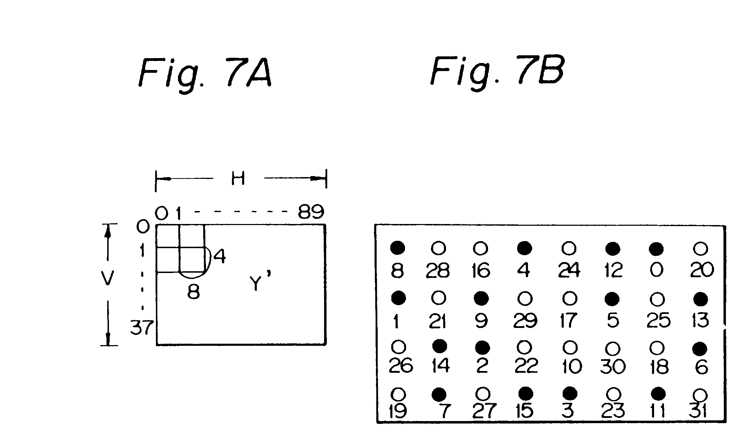

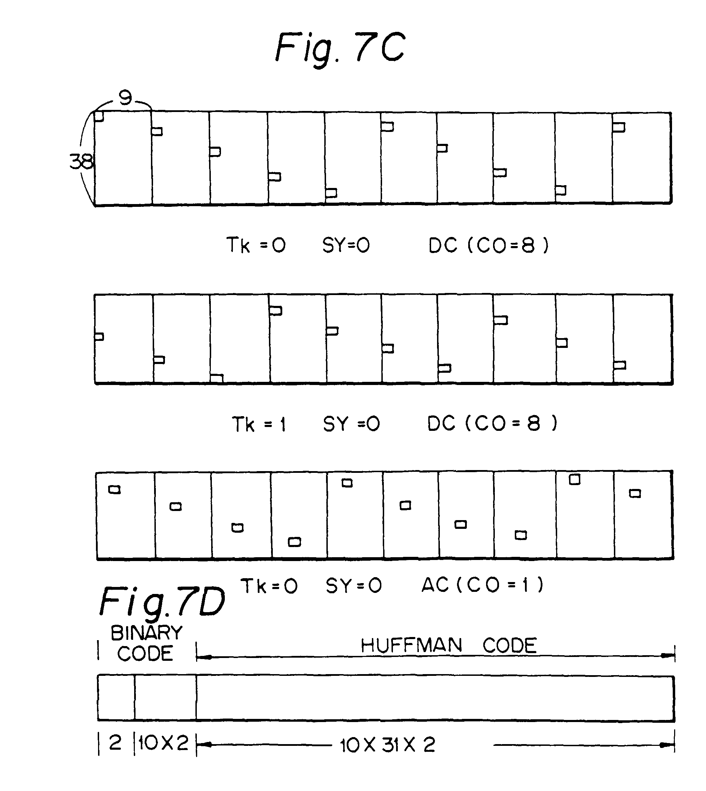

With reference to Fig. 7, the shuffling operation will be described. Fig. 7 shows the shuffling operation for the coefficient data Y' of the luminance signal. However, this shuffling operation can also apply to the color difference signals. Fig. 7A shows coefficient data of (90 x 38) blocks of Fig. 2C. The total number of coefficient data blocks is (90 x 38 x 32 = 109,440). Since 640 coefficient data blocks are contained in one sync block, the number of sync blocks in 1/4 fields is 171. With respect to this two-dimensional arrangement, a horizontal position H (= 0 to 89) and a vertical position V (= 0 to 37) are defined. In addition, with respect to 32 coefficient data in one block, as shown in Fig. 7B, coefficient No. C0 is defined. The coefficient data at the upper left corner (C0 = 8) is the DC component. In the zigzag scanning sequence, the number of orders increases and high frequency components of coefficient data are present.

The shuffling process determines a track No. Tk, a sync No. SY, and a coefficient No. Cn in accordance with the following formulas. The coefficient No. Cn is utilized for the shuffling.

$$Tk = [(C0 ¥ 16) + H + V] \bmod. 2$$

$$SY = [9 \times V + 67 \times H + 171 \times Cn)/16] \bmod. 171$$

$$Cn = [C0 + 8 + 4 \times (C0 ¥ 16)] \bmod. 16$$

where (C0 ¥ 16) represents that if the value of C0 is in the range from 0 to 15, the result is 0 and that if the value is in the range from 16 to 31, the result is 1.

By the just above mentioned formulas, the track No. which is either 0 or 1, the sync block number in the range from 0 to 170, and the coefficient No. Cn for the shuffling in the range from 0 to 15 are determined. Fig. 7C shows a practical example of the shuffling process. The coefficient data of (90 x 38) blocks is divided into 10 areas whose size is (9 x 38) blocks. Fig. 7C illustrates that coefficient data taken out from DCT blocks located in each area as shown in Fig. 7C is arranged at (Tk = 0, SY = 0, C0 = 8), (Tk = 1, SY = 0, C0 = 8), and (Tk = 0, SY = 0, C0 = 1) respectively. This arrangement is shuffling. The coefficient data retrieved from DCT block is contained in the same block.

The shuffled result is output in the order from a low order to a high order as shown in Fig. 7D. The two pieces of data on the left of Fig. 7D represent respective quantizing levels of the luminance signal Y and the color difference signal C. The next (10 x 2) pieces of data are coefficient data of the DC components of 10 DCT blocks for Y and C, respectively. The (10 x 31 x 2) pieces of data are coefficient data of the AC components of 10 DCT blocks for Y and C, respectively. The data of the DC components are not encoded to variable length data (specifically, Huffman encoding). Rather, the coefficient data of the AC components is Huffman encoded. The (31 x 10) pieces of the AC components of coefficient data are arranged in the sequence of a low order to a high order. Thus, as described above, the bits of the coefficient data where the length of sync blocks is kept constant become high order coefficient data. Since the bits controlled for keeping constant length tend to be affected by an error of another sync block, these bits are preferably high order coefficient data less important than the DC component data.

Reproduce data received from the tape head system 11 is supplied to a data reproduce circuit 22 through a channel decode circuit 21. The reproduce data from the data reproduce circuit 22 is sent to an inner code decoder 23. The decoder 23 corrects an error of the reproduce data by using a horizontal parity H. Thereafter, a next outer decoder 24 corrects an error of the reproduce data by using a vertical parity V. The data of the luminance signal of the reproduce data which was error-corrected at the decoder 24 is fed to a variable length decoder 25Y. The data of the color difference signals of the reproduce data which was error-corrected is fed to a decoder 25C. After the decoders 25Y and 25C, the luminance signal and the color difference signals are independently processed in the same way.

The variable length decoder 25Y and an inverse quantizing circuit 26Y are coupled. The inverse quantizing circuit 26Y converts the quantizing level into a representative value. In this case, data representing a quantizing level in which data is sent from the decoder 24 to the inverse quantizing circuit 26Y is used. This representative value is sent to a deshuffling circuit 27Y. The deshuffling circuit 27Y restores the data sequence arranged by the shuffling circuit 3Y of the record system to the original data sequence. The output of the deshuffling circuit 27Y is sent to an error concealment circuit 28Y.

The error concealment circuit 28Y compensates an error which cannot be corrected by the decoders 23 and 24 (this error is represented with an error flag) with correct coefficient data contained in the surrounding DCT blocks. The shuffling process and deshuffling process can prevent all coefficient data in any one block from becoming an error and thereby preventing the image quality from being deteriorated. In addition, a chance where the same order coefficient data which is contained in the surrounding blocks and which should be compensated becomes an error can be decreased. Thus, the error compensation capability can be improved. The output of the error concealment circuit 28Y is sent to an inverse transformation circuit 29Y. Luminance data reconstructed from the coefficient data is obtained from an output terminal 30Y.

Like the above mentioned luminance signal, with respect to the color difference signals, a variable length code decoder 25C, an inverse quantizing circuit 26C, deshuffling circuit 27C, an error concealment circuit 28C, and an inverse transformation circuit 29C are provided. Reconstructed color difference data is obtained form an output terminal 30C. Since the reconstructed data obtained from the output terminals 30Y and 30C are in block sequence, the data sequence is converted into the raster sequence by a block disassemble circuit (not shown in the figure).

According to the present invention, coefficient data which is generated by a transform encoding process is shuffled. Thus, even if a burst error takes place during transmission, the deterioration of images can be decreased. In addition, by using surrounding coefficient data, erroneous coefficient data can be easily compensated. Moreover, even if images are reproduced from a magnetic tape at a high speed, the data can be more equally reproduced with shuffling. Thus, the quality of the reproduced images can be improved. Further, according to the present invention, even if a variable length encoding technique is used, since the final length of sync blocks can be kept constant, an error correction encoding technique using a product code can be easily used.

In at least preferred embodiments, this invention provides a digital video recording apparatus for properly compensating errors which might take place in a record mode and a reproduce mode, for properly keeping the length of a sync block containing coefficient data constant, and for allowing the reproduction system to properly compensate erroneous coefficient data which was transform encoded.

**Claims**

1. A digital video signal recording apparatus for dividing an input digital video signal (Y,C) into a plurality of picture element blocks each containing a plurality of picture elements, for picture element block by picture element block transform encoding said digital video signal into coefficient data, and for recording said coefficient data on a magnetic tape using a plurality of magnetic heads disposed on a rotating drum, said apparatus being characterised by:

means (3Y, 3C) for arranging said coefficient data from a group of picture element blocks in a sequence from a low order to a high order and for outputting arranged coefficient data for said group;
variable length encoding means (5Y, 5C) for receiving said arranged coefficient data and for encoding said arranged coefficient data into variable length codes for forming a sync block of a fixed length; and
sync block length controlling means (6), coupled to said variable length encoding means, for moving an overflow portion of said variable length codes of a group that exceeds said fixed length to a sync block of a group for which said variable length codes do not fill said fixed length so as to keep the length of each sync block constant.

2. A digital video signal recording apparatus as claimed in claim 1, wherein said variable length encoding means (5Y, 5C) variable length encodes said coefficient data other than DC coefficient data.

3. A digital video signal recording apparatus as claimed in claim 1, wherein said sync block length controlling means (6) moves variable length codes corresponding to high order coefficient data so as to keep the length said sync block constant.

4. A digital video signal recording apparatus as claimed in claim 1, wherein

said means for arranging includes shuffling means (3Y, 3C) for shuffling said coefficient data such that picture element blocks corresponding to one field are allocated to a plurality of channels for recording on a plurality of tracks.

5. A digital video signal recording apparatus as claimed in claim 4, wherein said shuffling means (3Y, 3C) also shuffles said coefficient data within a picture element block according to a predetermined rule.

**Patentansprüche**

1. Digitales Videosignalaufzeichnungsgerät zur Unterteilung eines digitalen Videoeingangssignals (Y, C) in mehrere Bildelementblöcke, wobei jeder mehrere Bildelemente enthält, zur Bildelement-Blocktransformationscodierung durch Bildelementblocktransformation des digitalen Videosignals in Koeffizientendaten und zur Aufzeichnung der Koeffizientendaten auf einem Magnetband, wobei mehrere Magnetköpfe verwendet werden, die auf einer Drehtrommel angeordnet sind, wobei das Gerät gekennzeichnet ist durch

eine Einrichtung (3Y, 3C) zur Anordnung der Koeffizientendaten aus einer Gruppe von Bildelementblöcken in eine Folge von einer niedrigen Ordnung zu einer höheren Ordnung und zur Ausgabe der angeordneten Koeffizientendaten für diese Gruppe;
eine Variabellängen-Codiereinrichtung (5Y, 5C) zum Empfang der angeordneten Koeffizientendaten und zur Codierung der angeordneten Koeffizientendaten in Variabel längen-Codes zur Bildung eines Sync-Blocks einer festen Länge; und
eine Sync-Block-Längensteuereinrichtung (6), die mit der Variabellängen-Codiereinrichtung gekoppelt ist, um einen Überschußbereich der Variabellängen-Codes einer Gruppe, die die feste Länge übersteigt, in einen Sync-Block einer Gruppe zu verschieben, für den die Variabel längen-Codes nicht die feste Länge ausfüllen, um so die Länge eines jeden Sync-Blocks konstant zu halten.

2. Digitales Videosignalaufzeichnungsgerät nach Anspruch 1, wobei die Variabellängen-Codiereinrichtung (5Y, 5C) die Koeffizientendaten variabellängen-codiert, die keine Gleich-Koeffizientendaten sind.

3. Digitales Videosignalaufzeichnungsgerät nach Anspruch 1, wobei die Sync-Block-Längensteuereinrichtung (6) variable Längencodes, die den Koeffizientendaten höherer Ordnung entsprechen, verschiebt, um so die Länge des Sync-Blocks konstant zu halten.

4. Digitales Videosignalaufzeichnungsgerät nach Anspruch 1, wobei die Anordnungseinrichtung eine Umstellungseinrichtung (3Y, 3C) besitzt, um die Koeffizientendaten umzustellen, so daß Bildelementblöcke, die einem Teilbild entsprechen, mehreren Kanälen zur Aufzeichnung auf mehreren Spuren zugeteilt werden.

5. Digitales Videosignalaufzeichnungsgerät nach Anspruch 4, wobei die Umstellungseinrichtung (3Y, 3C) außerdem die Koeffizientendaten innerhalb eines Bildelementblocks entsprechend einer vorgegebenen Regel umstellt.

**Revendications**

1. Appareil d'enregistrement de signal vidéo numérique pour diviser un signal vidéo numérique d'entrée (Y, C) selon une pluralité de blocs d'éléments d'image visuelle dont chacun contient une pluralité d'éléments d'image visuelle, pour un codage par transformation bloc d'éléments d'image visuelle par bloc d'éléments d'image visuelle dudit signal vidéo numérique selon des données de coefficient, et pour enregistrer lesdites données de coefficient sur une bande magnétique en utilisant une pluralité de têtes magnétiques disposées sur un tambour tournant, ledit appareil étant caractérisé par :

un moyen (3Y, 3C) pour agencer lesdites données de coefficient provenant d'un groupe de blocs d'éléments d'image visuelle selon une séquence depuis un ordre faible jusqu'à un ordre élevé et pour émettre en sortie des données de coefficient agencées pour ledit groupe ;

un moyen de codage de longueur variable (5Y, 5C) pour recevoir lesdites données de coefficient agencées et pour coder lesdites données de coefficient agencées selon des codes de longueur variable pour former un bloc de synchronisation d'une longueur fixe ; et

un moyen de commande de longueur de bloc de synchronisation (6), couplé audit moyen de codage de longueur variable, pour déplacer une partie en dépassement desdits codes de longueur variable d'un groupe qui excède ladite longueur fixe jusqu'à un bloc de synchronisation d'un groupe pour lequel lesdits codes de longueur variable ne remplissent pas ladite longueur fixe de manière à maintenir constante la longueur de chaque bloc de synchronisation.

2. Appareil d'enregistrement de signal vidéo numérique selon la revendication 1, dans lequel ledit moyen de codage de longueur variable (5Y, 5C) code en longueur variable lesdites données de coefficient autres que des données de coefficient de composante continue.

3. Appareil d'enregistrement de signal vidéo numérique selon la revendication 1, dans lequel ledit moyen de commande de longueur de bloc de synchronisation (6) déplace des codes de longueur variable correspondant à des données de coefficient d'ordre élevé de manière à maintenir constante la longueur dudit bloc de synchronisation.

4. Appareil d'enregistrement de signal vidéo numérique selon la revendication 1, dans lequel :

ledit moyen d'agencement inclut un moyen d'emmêlement (3Y, 3C) pour emmêler lesdites données de coefficient de telle sorte que des blocs d'éléments d'image visuelle correspondant à une trame soient alloués à une pluralité de canaux pour un enregistrement sur une pluralité de pistes.

5. Appareil d'enregistrement de signal vidéo numérique selon la revendication 4, dans lequel ledit moyen d'emmêlement (3Y, 3C) emmêle également lesdites données de coefficient dans un bloc d'éléments d'image visuelle conformément à une règle prédéterminée.

Fig. 1
| Fig. 1A |
| Fig. 1B |

Fig. 1A

DCT 4X8 2Y — SHUFFLING 3Y — Q 4Y — VLC ENC 5Y

DCT 4X8 2C — SHUFFLING 3C — Q 4C — VLC ENC 5C

BUFFERING 7

BUFFERING 6 — PARITY GENERATION 8 — SYNC ID ADDITION 9 — CH ENC 10

TAPE HEAD SYSTEM 11

CH DEC 21

# Fig. 1B

# Fig. 2A

720 PICTURE ELEMENTS

304 LINES

Y

# Fig. 2B

90 BLOCKS

76 BLOCKS

4

8

Y

# Fig. 2C

90 BLOCKS

76 BLOCKS

Y'

90 BLOCKS

38 BLOCKS

Ya

90 BLOCKS

38 BLOCKS

Yb

## Fig. 3A

360 PICTURE ELEMENTS

304 LINES

CR

CB

## Fig. 3B

45 BLOCKS

76 BLOCKS

4

8

CR

CB

# Fig. 3C

# Fig.4

|  |  |  |
|---|---|---|
| $32 \times 10 + 32 \times 5 \times 2$ |  |  |

Tk = 0

Tk = 1

171

Tk = 0

Tk = 1

# Fig. 5

# Fig. 6

Fig. 7A

Fig. 7B

## Fig. 7C

Tk = O    SY=O    DC (CO = 8)

Tk = 1    SY = O    DC (CO = 8)

Tk = O    SY = O    AC (CO = 1)

## Fig.7D

BINARY CODE    HUFFMAN CODE

| 2 | 10 X 2 |———— 10 X 31 X 2 ————|